# FASCICULE DE BREVET EUROPEEN

(11) **EP 0 512 015 B1**
(45) Date de publication et mention de la délivrance du brevet: **02.11.1995**
(21) Numéro de dépôt: 91903125.2
(22) Date de dépôt: 11.01.1991
(51) Int. Cl.: F16L 31/00

(54) **RACCORDS SOUPLES POUR TUYAUX SOUPLES DESTINES A ETRE ENROULES A PLAT SUR EUX-MEMES ET PROCEDE D'ACCOUPLEMENT DE TUYAUX A PARTIR DESDITS RACCORDS**
BIEGSAME KUPPLUNG FÜR BIEGSAME FLACH GEWICKELTE ROHRE UND VERFAHREN ZUR VERBINDUNG VON ROHREN MIT DIESEN KUPPLUNGEN
FLEXIBLE COUPLING FOR HOSES TO BE ROLLED FLAT AND COUPLING METHOD

(30) Priorité: 12.01.1990 FR 9000356
(43) Date de publication de la demande: 11.11.1992
(73) Titulaire: LAMOUCHE, Jean, F-60880 Jaux (FR)
(72) Inventeur: LAMOUCHE, Jean, F-60880 Jaux (FR)
(74) Mandataire: Pernez, Helga
(86) Numéro de dépôt international: FR9100018
(87) Numéro de publication internationale: WO9110858

(56) Documents cités:
- DE-A- 1 650 166
- DE-A- 3 605 605
- GB-A- 1 007 245
- US-A- 2 547 983
- US-A- 3 033 594

## Description

L'invention a pour objet un dispositif souple de raccordement de tuyaux souples, à enrouler sur eux-mêmes. Les raccords traditionnels ont des parties solides, et vu leur diamètre assez conséquent, gênent considérablement à la régularité de leur enroulement, étant donné que les tuyaux se mettent à plat. On connait également dans l'état de la technique le brevet US-A-2 547 983 décrivant un moyen de raccordement de deux tuyaux pourvus d'un rebord annulaire par un manchon souple. Selon ce brevet, le manchon est indépendant, et le raccordement implique des manipulations complexes.

Le dispositif souple, selon l'invention, permet de remédier à cet inconvénient et amène les avantages suivants : souplesse, enroulement correct, gain de place, efficacité, pas de joint à changer, l'ensemble ne craint pas les chocs classiques de manipulation. Composé de caoutchouc toilé, il est léger, ne blesse pas les tuyaux lors de leur enroulement.

L'invention a donc pour objet un ensemble souple destiné au raccordement de tuyaux souples selon les caractéristiques de la revendication 1.

Selon une caractéristique particulière de l'invention, les deux bords de chacun des arrêtoirs présentent des profils identiques sous forme de chanfreins intérieurs, les chanfreins, opposés aux chanfreins engagés dans les épaulements à angles rentrants de la chambre annulaire, définissant avec la portion de paroi interne correspondante de la chambre annulaire, une cavité permettant, sous l'effet de la pression, d'exercer sur les lèvres formées par les chanfreins une poussée axiale sur les arrêtoirs et les tuyaux auxquels ils sont reliés et de favoriser l'emboitement du bord des arrêtoirs dans les épaulements à angles rentrants de la chambre annulaire et une poussée radiale améliorant l'étanchéité.

Un trait repère est tracé sur les tuyaux en aval des arrêtoirs de façon à procéder sans hésitation aux manipulations de raccordement.

Le procédé du raccordement consiste à suivre l'ordre chronologique suivant :
- l'extrémité de chaque tuyau munie d'un arrêtoir est mise à plat, pliée en deux dans le sens longitudinal, ensuite introduite dans le manchon maintenu cylindrique jusqu'au repère de position du manchon,
- l'ensemble est mis à plat pour bien faire épouser aux contours de l'arrêtoir ceux de l'évidement du manchon, puis est étiré de part et d'autre pour l'enclenchement de l'emboîtement à queue d'aronde.

L'invention sera mieux comprise à la lecture de la description qui va suivre, faite en référence aux dessins annexés, donnés uniquement à titre d'exemple et sur lesquels :
- La Fig.1 est une vue en élévation et en coupe du manchon de l'ensemble de raccordement suivant l'invention,
- la Fig.2 est une vue en élévation et en coupe d'un arrêtoir entrant dans la construction de l'ensemble de raccordement,
- la Fig.3 est une vue partielle en coupe de deux tuyaux souples reliés par l'ensemble de raccordement suivant l'invention,
- la Fig.4 est une vue en élévation de l'assemblage de la Fig.3,
- les Fig.5 à 9 montrent les phases successives du procédé de raccordement à l'aide de l'ensemble suivant l'invention.

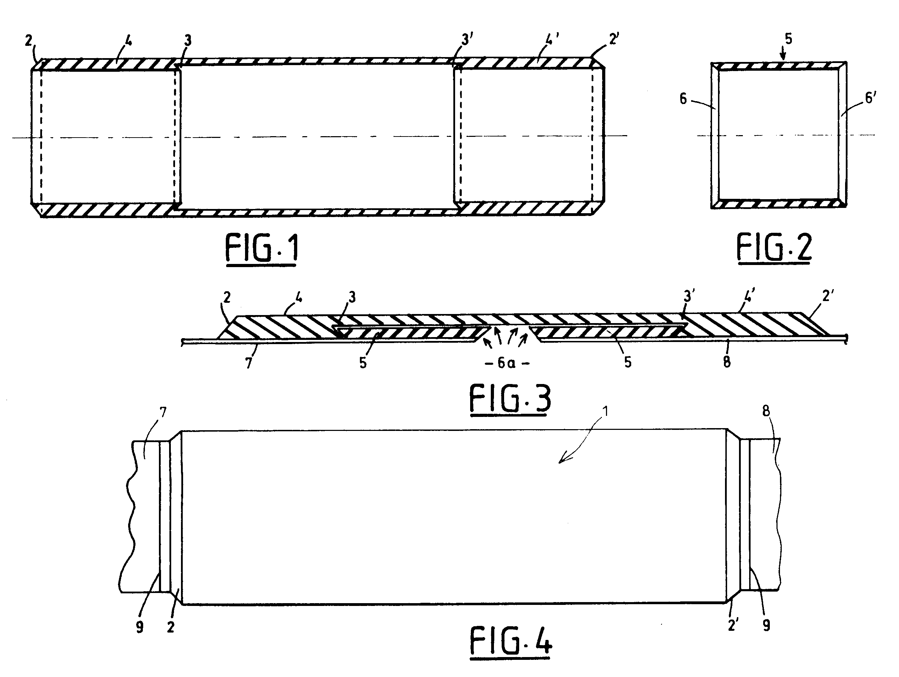

En référence de ces dessins, le raccord souple est composé de trois éléments : 1° une partie appelée "manchon de raccordement" 1, 2° deux parties appelées "arrêtoirs" 5. Le manchon de raccordement est double femelle (Fig.1). Il est de forme cylindrique, chanfreiné en 2, 2' à chaque extrémité extérieurement de l'ordre de 45° (Fig.1) pour que lors de la manipulation des tuyaux raccordés, ce manchon n'accroche pas. En son intérieur est prévu un évidement ou chambre annulaire destiné à recevoir deux arrêtoirs 5 avec un intervalle suffisant pour exécuter la manipulation pour l'assemblage. Cet évidement présente, en coupe axiale, une forme de queue d'aronde avec des angles 3, 3' de 45°. Ces angles ont pour mission d'accrocher les arrêtoirs 5. Le diamètre intérieur de l'évidement ou chambre annulaire correspond au diamètre extérieur des arrêtoirs 5. Chaque partie d'extrémité 4, 4' du manchon 1 a pour diamètre intérieur le diamètre extérieur des tuyaux à raccorder. Les arrêtoirs 5 de forme cylindrique (Fig.2) ont chacun la même forme et les mêmes dimensions ; leur diamètre extérieur correspond au diamètre intérieur de l'évidement cité précédemment pour le manchon. Chacun est chanfreiné à ses extrémités de l'ordre de 45° en 6, 6' intérieurement de façon à être réversible. Le diamètre intérieur des arrêtoirs correspond au diamètre extérieur des tuyaux à raccorder. Il sont à fixer définitivement à chaque extrémité des tuyaux 7, 8 par vulcanisation, par collage ou autre. Mais il y a également possibilité de les confectionner en même temps que les tuyaux, en un seul ensemble. Le manchon 1 et les arrêtoirs 5 sont constitués de caoutchouc toilé ou autre complexe synthétique, souple et étanche. La toile est enrobée sur toutes ses formes ; son rôle est de donner une résistance à ces pièces pour ne pas qu'elles se déforment sous l'effet de la pression. Les arrêtoirs 5 placés à chaque extrémité de l'évidement du manchon 1 laissent entre eux un intervalle appelé cavité 6a. Cette cavité a pour rôle :
a) de permettre l'emboîtement ou déboîtement des tuyaux ;
b) sous l'effet de la pression dans cette cavité, s'exerce une poussée axiale qui éloigne arrêtoirs et tuyaux, puis resserre l'emboîtement entre les extrémités chanfreinées 6 des arrêtoirs et les épaulements à angles rentrants 3, 3' de l'évidement ou chambre annulaire du manchon.

De plus, l'application des lèvres formées par les chanfreins 6' aux extrémités axiales internes des arrêtoirs contre la paroi du manchon améliore encore l'étanchéité.

Les tuyaux 7, 8 ont chacun un repère limite 9 pour exécuter l'enfoncement dans le manchon 1, lors du raccordement.

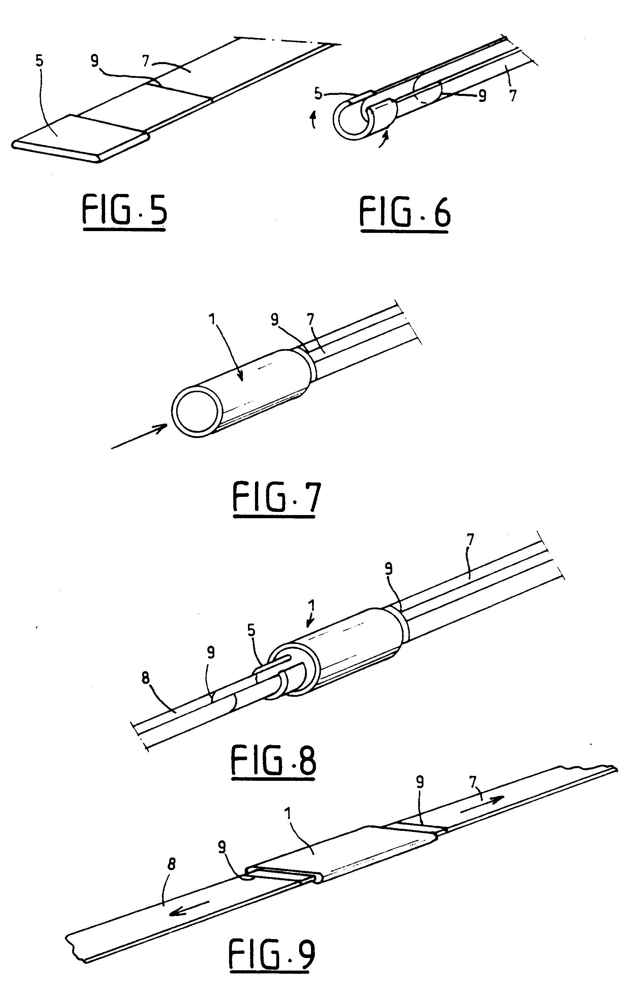

Pour effectuer un raccordement, des gestes simples de manipulation doivent être exécutés chronologiquement. On commence par prendre l'extrémité d'un tuyau 7 munie d'un arrêtoir 5, à le mettre à plat (Fig.5) puis à le plier en deux dans le sens longitudinal (Fig.6), à prendre le manchon femelle 1 maintenu cylindrique (Fig.7) et introduire le tuyau 7 muni d'un arrêtoir dans le manchon jusqu'au repère limite d'emboîtement 9. En maintenant toujours le manchon 1 cylindrique on introduit l'autre tuyau 8 à raccorder après l'avoir plié en deux comme le tuyau 7. L'opération suivante consiste à remettre l'ensemble à plat pour bien faire épouser les contours des arrêtoirs 5 avec ceux de l'évidement du manchon et enfin à étirer de part et d'autre les tuyaux 7 et 8 pour assurer l'enclenchement au niveau des bords chanfreinés des arrêtoirs 5 et des épaulements à angles rentrants 3, 3' de la chambre annulaire. Les angles à 45° employés pour cette conception peuvent être remplacés par des angles notamment compris entre 30° et 90°, mais la valeur de 45° reste la valeur préférentielle. Ces raccords souples pourraient être utilisés notamment pour les tuyaux de refoulement enroulés sur eux-mêmes sur dévidoir, etc... utilisés par les sapeurs-pompiers.

## Revendications

1. Ensemble souple de raccordement de tuyaux souples, comprenant un manchon (1) recevant les extrémités de deux tuyaux souples à raccorder, et pourvu de moyens d'assemblage coopérant avec des moyens d'assemblage complémentaires portés par les extrémités desdits tuyaux souples, les moyens d'assemblage du manchon (1) comportant une chambre annulaire ménagée dans la paroi interne du manchon (1), et dont les bords forment des épaulements à angles rentrants (3, 3') lui donnant, en coupe axiale, un profil de queue d'aronde, les moyens d'assemblage complémentaires portés par les tuyaux (7, 8) à raccorder étant constitués par des arrêtoirs tubulaires (5) solidaires des extrémités des tuyaux (7, 8), lesdits arrêtoirs tubulaires (5) présentant un diamètre extérieur correspondant au diamètre intérieur de la chambre annulaire ménagée dans le manchon (1), l'un au moins des bords de chacun des arrêtoirs tubulaires (5) coopérant avec l'épaulement à angles rentrants correspondant de la chambre annulaire, la longueur de la chambre annulaire étant supérieure à la somme des longueurs des arrêtoirs fixés sur les extrémités des tuyaux à raccorder, les bords de la chambre annulaire coopérant avec l'épaulement correspondant à angle rentrant, de la chambre annulaire présentant un profil incliné (6) complémentaire de celui de l'épaulement (3).

2. Ensemble selon la revendication 1, caractérisé en ce que les deux bords (6, 6') de chacun des arrêtoirs présentent des profils identiques sous forme de chanfreins intérieurs, les chanfreins (6') opposés aux chanfreins (6) étant engagés dans les épaulements à angles rentrants (3, 3') de la chambre annulaire et définissant avec la portion de paroi interne correspondante de la chambre annulaire, une cavité (6a) permettant, sous l'effet de la pression, d'exercer sur les lèvres formées par les chanfreins une poussée axiale sur les arrêtoirs (5) et les tuyaux (7, 8) auxquels ils sont reliés.

3. Ensemble selon l'une des revendications 1 ou 2, caractérisé en ce que le manchon (1) et les deux arrêtoirs (5) sont composés d'un complexe synthétique ou en caoutchouc toilé, étanche et souple, la toile étant enrobée sur toutes ses formes.

4. Ensemble selon l'une quelconque des revendications précédentes, caractérisé en ce que les épaulements (3, 3') à angles rentrants de la chambre annulaire et/ou les chanfreins (6, 6') formant les lèvres d'extrémité des arrêtoirs (5) sont obtenus par superposition d'une pluralités de couches entoilées.

5. Ensemble selon l'une quelconque des revendications précédentes, caractérisé en ce que les arrêtoirs (5) sont prévus directement solidaires des extrémités correspondantes des tuyaux.

6. Ensemble selon l'une quelconque des revendications précédentes, caractérisé en ce que les angles des épaulements à angles rentrants (3,3') et les chanfreins (6) des arrêtoirs (5) qui coopèrent avec ceux-ci ont une valeur de l'ordre de 45°.

7. Ensemble selon l'une quelconque des revendications précédentes, caractérisé en ce qu'un trait repère (9) de la position (1) du manchon est tracé sur les tuyaux (7, 8) de façon à faciliter le raccordement.

8. Procédé de réalisation d'un ensemble souple selon l'une quelconque des revendications précédentes, contenant les opérations successives suivantes :
- l'extrémité d'un tuyau souple (7, 8) muni d'un arrêtoir (5) est mise à plat, pliée en deux dans le sens longitudinal,
- l'extrémité dudit tuyau étant ensuite introduite dans le manchon (1) maintenu cylindrique, jusqu'au repère (9) de la position du manchon,
- l'ensemble étant ensuite mis à plat pour faire épouser aux contours de l'arrêtoir (5) ceux de l'évidement du manchon, puis étiré de part et d'autre pour l'engagement des bords chanfreinés (6) et des arrêtoirs (5) dans les épaulements à angles rentrants (3, 3') du manchon (1)

## Claims

1. A flexible unit for connecting hoses, including a sleeve (1) for receiving the ends of two hoses to be connected, and provided with assembling means which cooperate with complementary assembling means carried by the ends of said hose, said means for assembling said sleeve (1) including an annular chamber formed into sleeve (1) internal wall, and the edges of which constitute shoulders with reentrant angles (3, 3') conferring it, in an axial cross-sectional view, a dovetail configuration, said complementary assembling means carried by said hoses (7, 8) to be connected being made up of tubular stops (5) integral with both hose (7, 8) ends, said tubular stops (5) having an external diameter corresponding to the internal diameter of said annular chamber formed in said sleeve (1), at least one of the edges of each tubular stop (5) cooperating with the corresponding reentrant angle shoulder of said annular chamber, with the length of said annular chamber being greater than the sum of the lengths of stops which are fixed on the end portions of hoses to be connected, the edges of said annular chamber cooperating with the corresponding reentrant angle shoulder of said annular chamber having an inclined configuration (6) complementary to that of said shoulder (3).

2. The unit of claim 1, characterized in that both edges (6, 6') of each stop show similar configurations as internal chamfers, with said chamfers (6') opposed to chamfers (6) being engaged with said reentrant angle shoulders (3, 3') of said annular chamber and defining with the corresponding internal wall portion of said annular chamber, a cavity (6a) allowing, through a pressure effect, an axial push to be exerted on lips formed by said chamfers onto said stops (5) and hoses (7, 8) to which they are connected.

3. The unit of either claim 1 or 2, characterized in that said sleeve (1) and both stops (5) are made of tight and flexible synthetic complex or linen rubber, with said linen being coated on all the portions thereof.

4. The unit of any preceding claim, characterized in that said reentrant angle shoulders (3, 3') of said annular chamber and/or said chamfers (6, 6') constituting the end lips of said stops (5) are obtained by superposing a plurality of linen layers.

5. The unit of any preceding claim, characterized in that said stops (5) are provided directly integral with the hose corresponding ends.

6. The unit of any preceding claim, characterized in that the angles of said reentrant angle shoulders (3, 3') and stop (5) chamfers (6) which cooperate therewith are of the order of 45°.

7. The unit of any preceding claim, characterized in that a mark (9) for locating sleeve position is drawn onto said hoses (7, 8) so as to make the connection operation easier.

8. A process for making a flexible unit, according to any preceding claim, including the successive operations as follows :
- the end portion of a hose (7, 8) provided with a stop (5) is longitudinally laid down in an horizontal position, bent double;
- then the end portion of said hose is threaded in said cylindrically maintained sleeve (1), up to the sleeve locating mark (9);
- then, the unit is laid down in an horizontal position so as said stop (5) contours match those of said sleeve recess; then it is extended on both sides for engaging chamfered edges (6) and stops (5) with said sleeve (1) reentrant angle shoulders (5).

## Patentansprüche

1. Biegsame Kupplungseinheit für biegsame Rohre, bestehend aus einer Hülse (1) für die Aufnahme der Enden der beiden zu verbindenden biegsamen Rohre und versehen mit Verbindungsmitteln, die mit komplementären Verbindungsmitteln zusammenwirken, die auf den Enden der erwähnten biegsamen Rohre sitzen, wobei die Verbindungsmittel der Hülse (1) eine ringförmige Kammer umfassen, die in der Innenwand der Hülse (1) ausgespart ist und deren Ränder Ansätze mit einspringenden Ecken (3, 3') bilden, welche ihr im Axialschnitt ein Schwalbenschwanzprofil verleihen, und wobei die komplementären Verbindungsmittel, die auf den zu verbindenden Rohren (7, 8) sitzen, von röhrenförmigen Arretiermitteln (5) gebildet werden, die mit den Enden der Rohre (7, 8) verbunden sind, wobei die erwähnten röhrenförmigen Arretiermittel (5) einen Außendurchmesser aufweisen, der dem Innendurchmesser der ringförmigen Kammer entspricht, die in der Hülse (1) ausgespart ist, wobei zumindest einer der Ränder eines jeden der ringförmigen Arretiermittel (5) mit dem entsprechenden Ansatz mit einspringenden Ecken der ringförmigen Kammer zusammenwirkt, wobei die Länge der ringförmigen Kammer größer als die Summe der Längen der Arretiermittel ist, die auf den Enden der zu verbindenden Rohre befestigt sind, wobei die Ränder der ringförmigen Kammer mit dem entsprechenden Ansatz mit einspringenden Ecken der ringförmigen Kammer zusammenwirken, die ein geneigtes Profil (6) aufweist, das zu jenem des Ansatzes (3) komplementär ist.

2. Einheit nach Anspruch 1, dadurch gekennzeichnet, daß die beiden Ränder (6, 6') eines jeden der Arretiermittel identische Profile in Form von abgefasten Innenkanten aufweisen, wobei die den abgefasten Kanten (6) gegenüberliegenden abgefasten Kanten (6') in die Ansätze mit einspringenden Ecken (3, 3') der ringförmigen Kammer eingreifen und mit dem entsprechenden Teil der Innenwand der ringförmigen Kammer einen Hohlraum (6a) bilden, der es ermöglicht, unter der Wirkung des Drucks auf die Lippen, die von den abgefasten Kanten gebildet werden, einen Axialschub auf die Arretiermittel (5) und die Rohre (7, 8), mit denen sie verbunden sind, auszuüben.

3. Einheit nach einem der Ansprüche 1 oder 2, dadurch gekennzeichnet, daß die Hülse (1) und die beiden Arretiermittel (5) aus einem synthetischen Komplex oder einem Komplex aus Leinwandgummi, dicht und biegsam, bestehen, wobei die Leinwand auf allen ihren Formen umhüllt ist.

4. Einheit nach einem der vorhergehenden Ansprüche, dadurch gekennzeichnet, daß die Ansätze (3, 3') mit einspringenden Ecken der ringförmigen Kammer und/oder die abgefasten Kanten (6, 6'), die die Endlippen der Arretiermittel (5) bilden, durch Übereinanderlagerung einer Vielzahl von in Leinwand eingepackten Schichten gewonnen werden.

5. Einheit nach einem der vorhergehenden Ansprüche, dadurch gekennzeichnet, daß die Arretiermittel (5) direkt mit den entsprechenden Enden der Rohre verbunden vorgesehen sind.

6. Einheit nach einem der vorhergehenden Ansprüche, dadurch gekennzeichnet, daß die Ecken der Ansätze mit einspringenden Ecken (3, 3') und die abgefasten Kanten (6) der Arretiermittel (5), die mit diesen zusammenwirken, einen Wert von ungefähr 45° aufweisen.

7. Einheit nach einem der vorhergehenden Ansprüche, dadurch gekennzeichnet, daß eine Referenzmarke (9) der Position (1) der Hülse auf den Rohren (7, 8) eingezeichnet wird, um die Verbindung zu erleichtern.

8. Verfahren zur Herstellung einer biegsamen Einheit nach einem der vorhergehenden Ansprüche, das die folgenden aufeinanderfolgenden Operationen umfaßt:
- das Ende eines biegsamen Rohres (7, 8), das mit einem Arretiermittel (5) versehen ist, abgeflacht und in Längsrichtung in zwei Teile gefaltet wird,
- das Ende des erwähnten Rohres sodann in die Hülse (1), die zylindrisch gehalten ist, bis zu der Referenzmarke (9) der Position der Hülse eingeführt wird,
- die Einheit sodann abgeflacht wird, um die Konturen des Arretiermittels (5) an jene der Aussparung der Hülse anzupassen, und sie hierauf auf beiden Seiten auseinandergezogen wird, sodaß die abgefasten Kanten (6) und die Arretiermittel (5) in die Ansätze mit einspringenden Ecken (3, 3') der Hülse (1) eingreifen.
